# FASCICULE DE BREVET EUROPEEN

(11) **EP 0 669 483 B1**
(45) Date de publication et mention de la délivrance du brevet: **22.04.1998**
(21) Numéro de dépôt: 95400377.8
(22) Date de dépôt: 22.02.1995
(51) Int. Cl.: F16F 7/12, B61G 11/16

(54) **Absorbeur d'énergie pour véhicule ferroviaire**
Energieaufnahmevorrichtung für Schienenfahrzeug
Energy absorber for rail vehicle

(30) Priorité: 23.02.1994 FR 9402055
(43) Date de publication de la demande: 30.08.1995
(73) Titulaire: A.N.F. INDUSTRIE, F-59154 Crespin (FR)
(72) Inventeur: Fraikin, Bruno, F-59700 Marcq en Baroeul (FR); Matthieu, Pascal, F-59300 Valenciennes (FR)
(74) Mandataire: Clisci, Serge

(56) Documents cités:
- DE-C- 446 174
- FR-A- 2 531 392
- FR-A- 2 684 060
- US-A- 4 830 347
- AUTOMOTIVE ENGINEERING, vol. 89, DALLAS,USA, page 24 'ENERGY-ABSORBING STRUCTURE IMPROVES AIRCRAFT SAFETY'
- PATENT ABSTRACTS OF JAPAN vol. 9 no. 135 (M-386) ,11 Juin 1985 & JP-A-60 015238 (TOYODA GOSEI KK) 25 Janvier 1985,
- PATENT ABSTRACTS OF JAPAN vol. 7 no. 47 (M-196) ,24 Février 1983 & JP-A-57 195939 (MITSUI PORIKEMIKARU KK) 1 Décembre 1982,

## Description

L'invention concerne un absorbeur d'énergie pour véhicule ferroviaire.

Lors d'un choc essentiellement longitudinal entre deux véhicules ferroviaires, l'énergie cinétique doit se dégager d'une manière ou d'une autre : compte tenu de la grande rigidité du châssis constitué par les longerons, les traverses de tête, les traverses pivot et le ou les planchers, d'une part, et de la relative absence de rigidité du reste de la caisse, le choc se traduit par des répercussions brutales au niveau du châssis et des risques de déformations importantes sur le reste de la caisse par chevauchement des deux véhicules antagonistes.

La présence de peignes anti-chevauchement aux extrémités des véhicules évite le chevauchement et la pénétration du châssis d'un véhicule dans la caisse de l'autre, en cas de choc, mais ne fait qu'accentuer la dureté du choc entre les véhicules et transmettre des accélérations importantes aux passagers. Il est donc utile de prévoir dans la zone d'impact un dispositif absorbeur pour dissiper l'énergie cinétique des véhicules par déformation plastique ou endommagement des matériaux constituant ledit dispositif afin de limiter les accélérations transmises aux passagers.

On connaît par exemple par le document FR-A-2 531 392 des absorbeurs de chocs couplés à des dispositifs anti-grimpement, mais ils sont d'intérêt limité car conçus pour un niveau d'absorption d'énergie relativement bas.

Le document FR-A-2 684 060, qui sert de base au préambule de la revendication 1, fait connaître quant à lui un dispositif d'amortissement de choc constitué de poutres courbes articulées par paires antagonistes et s'ouvrant sous un choc longitudinal. Cette construction de poutres, d'articulations et accessoirement de glissières pour guider les poutres pendant leur déformation est compliquée.

L'invention vise à proposer un absorbeur de choc de fabrication simple et économique, aisément modulable en fonction des niveaux d'énergie absorbée désirés, facilement remplaçable en cas d'accident, et qui puisse par un choix judicieux des dispositions constructives, conduire à une courbe déformation/effort présentant un palier très long non précédé d'un pic.

Pour atteindre son but, l'invention propose un absorbeur d'énergie pour véhicule ferroviaire, constitué de profils à parties cylindriques s'étendant entre deux surfaces frontales, ces profils étant déformables sous un choc longitudinal et résistant sensiblement aux efforts transversaux, les parties cylindriques déformables étant essentiellement constituées par des tôles en secteurs cylindriques disposés de manière que leur concavité soit dirigée orthogonalement par rapport à l'axe longitudinal du véhicule, afin qu'ils s'écrasent sous le choc en refermant un peu plus leur concavité, caractérisé en ce que les secteurs cylindriques sont amincis, de préférence par usinage, au niveau d'un plan tangent longitudinal.

Les parties cylindriques (à section en arc de cercle ou voisine d'un arc de cercle) sont disposées de sorte que la déformation sous le choc entraîne une augmentation de la courbure (c'est-à-dire une diminution du rayon de courbure local), au contraire de- la déformation des poutres conformes au document FR-A-2 684 060.

Conformément à un mode de réalisation, lesdits secteurs cylindriques sont constitués par des ondulations formées, orthogonalement à l'axe longitudinal, sur des tôles globalement parallèles à l'axe longitudinal du véhicule reliant lesdites deux surfaces parallèles.

Il est prévu au moins deux tôles, sensiblement perpendiculaires entre elles, et de préférence quatre tôles formant sensiblement un caisson.

Selon un autre mode de réalisation préféré, lesdits secteurs cylindriques sont constitués par les parois de tubes cylindriques, qui sont avantageusement disposés entre les faces parallèles d'au moins une enveloppe aplatie en tôle.

Ce mode de réalisation est particulièrement avantageux en ce qu'il permet aisément de moduler le niveau d'effort d'écrasement à absorber et la course utile en jouant sur la géométrie exacte du caisson (par exemple longueur et diamètre des tubes), les épaisseurs de ces parties constitutives, le nombre d'enveloppes et le nombre de tubes dans chaque enveloppe. On peut notamment prévoir des tubes de diamètre différents pour obtenir une courbe effort/déplacement étagée.

Lors d'un choc, les tubes s'écrasent et s'aplatissent en absorbant l'énergie du choc, les enveloppes servant à transmettre l'effort d'écrasement aux profils internes, à répartir la déformation sur toute la longueur des tubes, à reprendre les efforts dans une direction perpendiculaire de celle de l'effort d'écrasement, et tout particulièrement dans la direction verticale (où un déplacement serait susceptible d'entraîner un chevauchement), et à absorber une partie de l'énergie par leur propre déformation.

L'absorbeur d'énergie conforme à l'invention est remarquable en ce que le niveau d'effort d'écrasement est sensiblement constant tout au long de sa course, le niveau d'effort lors de l'amorçage de la déformation plastique ou de l'endommagement étant proche du niveau d'effort d'écrasement et en ce qu'il peut supporter des efforts significatifs dans une direction perpendiculaire à celle de l'effort d'écrasement sans déformation notable par rapport à son mode de déformation privilégié.

De préférence également, l'épaisseur de tôle des secteurs cylindriques est inférieure à 20 % du rayon de courbure.

L'absorbeur conforme à l'invention est monté de préférence entre la structure de caisse et un peigne anti-chevauchement.

D'autres avantages et caractéristiques ressortiront de la description ci-après de deux modes de réalisation de l'invention. On se référera aux figures sur lesquelles :
- la figure 1 est une vue en perspective d'un premier mode de réalisation auquel s'applique l'invention, dont le détail est visible figure 3,
- la figure 2 est une vue en perspective d'un second mode de réalisation auquel s'applique l'invention, dont le détail est visible figure 4,
- la figure 3 est une vue du détail d'un tube usiné selon l'invention appliquée au premier mode de réalisation,
- la figure 4 montre l'application de la même invention au second mode de réalisation,
- la figure 5 est un exemple de courbe effort/déplacement d'un absorbeur conforme à l'invention.
- la figure 6 montre en coupe transversale une modification constructive du mode de réalisation de la figure 1,
- la figure 7 montre un exemple de courbe effort/déplacement obtenu grâce à la modification de la figure 6.

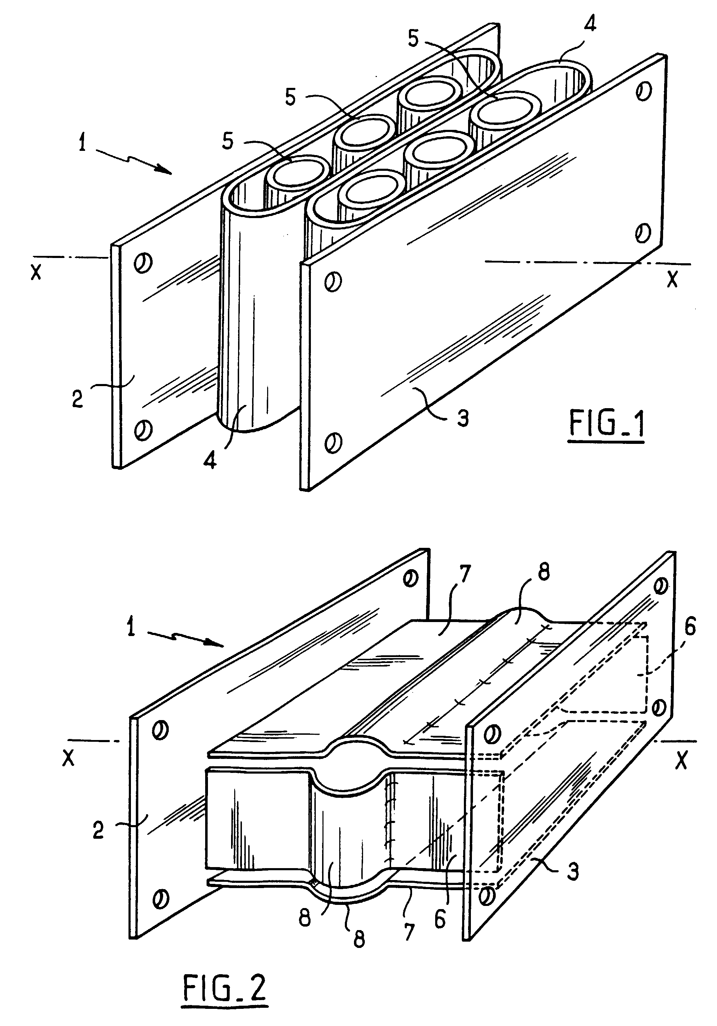

La figure 1 montre le caisson absorbeur 1, destiné à être placé entre l'extrémité du châssis et le peigne anti-chevauchement d'un véhicule ferroviaire non représenté. Il est constitué essentiellement de deux enveloppes cylindriques aplaties 4, contiguës, dont chacune renferme entre ses faces planes trois tubes cylindriques 5 métalliques parallèles entre eux et auxdites faces. Ces enveloppes 4 peuvent être fixées en place grâce à une ou deux plaques de fixation 2, 3 ou bien directement par leurs faces frontales extérieures. Les enveloppes 4 sont fixées entre elles et aux plaques, le cas échéant, par soudure et/ou plots de centrage leur permettant de résister aux efforts transversaux et de les transmettre.

Dans un exemple pratique de réalisation destiné à équiper un véhicule ferroviaire d'une masse de 90 tonnes maximum et à absorber des efforts de l'ordre de 700 à 800 kN, le caisson absorbeur fait environ 450 mm de largeur, 300 mm de hauteur et 220 mm d'épaisseur. La tôle constituant l'enveloppe 4 et les tubes 5 a une épaisseur comprise entre 6 et 15 mm. Le diamètre des six tubes est d'environ 89 mm. D'une manière générale, pour rendre la courbe effort/écrasement plus plate, il est bon de prévoir que l'épaisseur de tôle cylindrique est inférieure à 10 % de la valeur du diamètre.

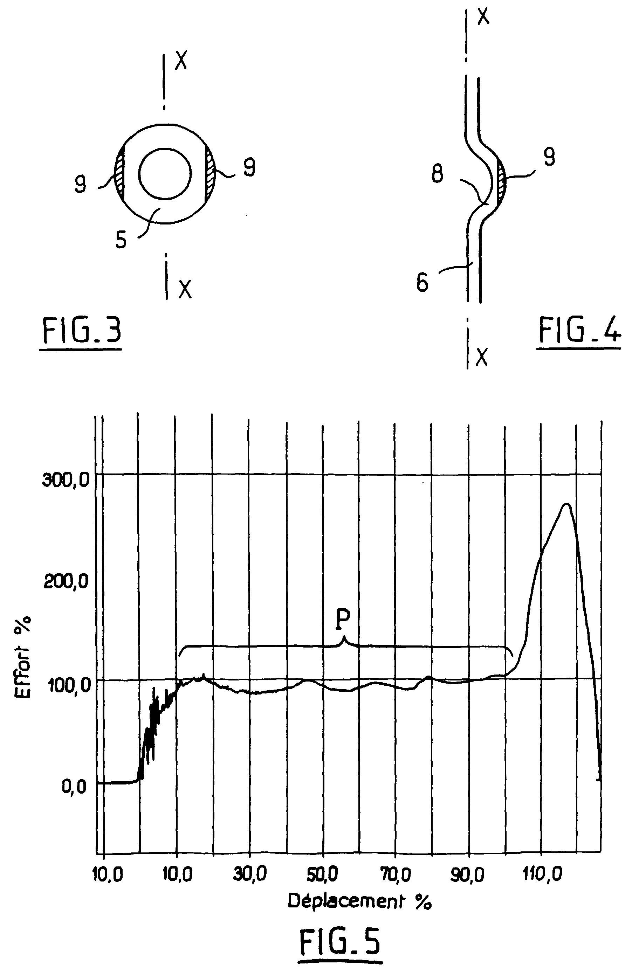

Selon l'invention, on allonge le palier de la courbe en amincissant les tubes au niveau des plans tangents latéraux parallèles à l'axe longitudinal XX du véhicule. La plus simple est d'enlever par usinage un segment 9 de tube (figure 3).

Grâce à ces dispositions constructives, il est possible d'obtenir une courbe effort/déplacement du type de celle représentée figure 5, et qui comporte un long palier P, non précédé d'un pic.

Un avantage inhérent à ce mode de réalisation est qu'il n'est pas nécessaire d'utiliser des matériaux présentant un allongement à la rupture très important. En effet, la ou les enveloppes extérieures 4 ne seront jamais écrasées complètement puisqu'elles seront bloquées sur les tubes écrasés (qui, eux, peuvent subir des amorces de rupture sur les bords écrasés).

Les matériaux constitutifs de l'absorbeur sont choisis en fonction des objectifs recherchée.

Par exemple, il est possible d'employer un métal dont l'allongement à rupture soit supérieur à 30 % pour réaliser des enveloppes 4 et les tubes 5 : aciers E24 normalisé, TU37b, Inox 304. Dans ce cas, aucune fissuration n'apparaît dans le matériau, mais le niveau d'effort augmente en fin d'écrasement (cf. figure 5).

Il est au contraire possible d'employer pour les tubes 5 un métal dont l'allongement à rupture est inférieur à 20 % : acier XC35 par exemple. Dans ce cas, il y aura rupture des tubes en fin d'écrasement, et l'augmentation de l'effort à ce moment est plus faible, indépendamment du matériau qui constitue l'enveloppe.

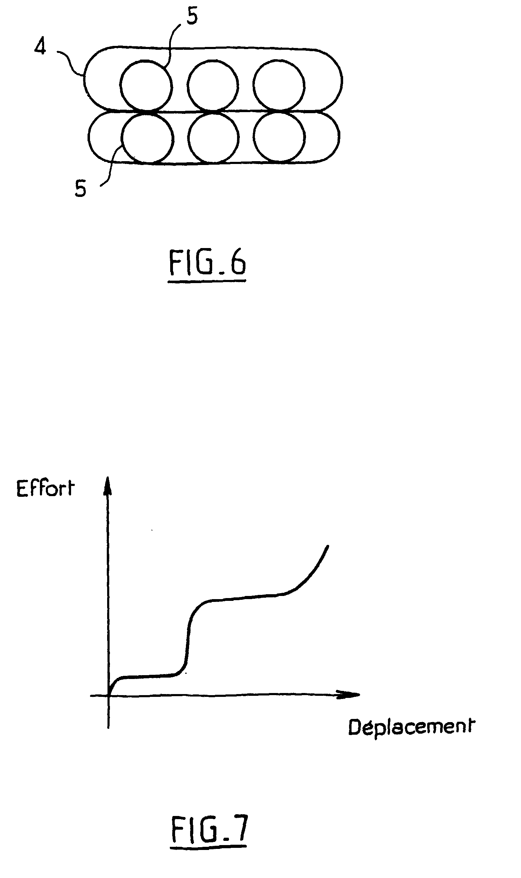

On peut prévoir des courbes effort/allongement étagées (cf. figure 7) en prévoyant des tubes 5 à caractéristiques différentes dans les enveloppes 4 successives ou en prévoyant un jeu fonctionnel entre l'une des enveloppes 4 externes et les tubes 5 (cf. figure 6).

Le second mode de réalisation, présenté sur la figure 2, comporte deux plaques frontales 2 et 3, entre lesquelles sont soudées deux plaques verticales associées 6 et deux plaques horizontales associées 7 comportant au moins une ondulation 8 transversale de forme cylindrique. Pour chaque paire de plaques associées, les ondulations 8 sont opposées.

L'ensemble des ondulations 8 s'écrase en cas de choc longitudinal et absorbe l'énergie, tandis que les plaques respectivement verticales 6 et horizontales 7 peuvent résister à des efforts respectivement verticaux et horizontaux.

Dans un exemple de réalisation, l'épaisseur des plaques 6 ou 7 est de l'ordre de 6 à 15 mm pour résister à des efforts comparables à ceux qu'on a mentionnés plus haut.

Le rayon de la partie cylindrique des ondulations 8 est du même ordre que celui des tubes 5, et de préférence compris entre 50 et 100 mm. Les ondulations 8 se raccordent à la partie plane des plaques 6 et 7 par un arrondi compris entre 50 et 150 mm. Le matériau constitutif a de préférence un allongement à rupture supérieur ou égal à 25 %.

Comme dans le premier mode de réalisation, on usine les ondulations 8 (cf. figure 4).

## Revendications

1. Absorbeur d'énergie pour véhicule ferroviaire d'axe longitudinal (XX), constitué de profils à parties cylindriques s'étendant entre deux surfaces frontales (2, 3, 4), ces profils étant déformables sous un choc longitudinal et résistant sensiblement aux efforts transversaux, les parties cylindriques déformables étant essentiellement constituées par des tôles en secteurs cylindriques (5, 8) disposés de manière que leur concavité soit dirigée orthogonalement à l'axe longitudinal (XX) afin qu'ils s'écrasent sous le choc en refermant un peu plus leur concavité, caractérisé en ce que les secteurs cylindriques (5, 8) sont amincis, de préférence par usinage, au niveau d'un plan tangent longitudinal.

2. Absorbeur selon la revendication 1, caractérisé en ce que lesdits secteurs cylindriques (8) sont constitués par des ondulations, formées orthogonalement à l'axe longitudinal (XX) sur des tôles globalement parallèles à l'axe longitudinal (XX) du véhicule et reliant lesdites deux surfaces frontales (2, 3).

3. Absorbeur selon la revendication 2, caractérisé en ce qu'il est prévu au moins deux tôles (6, 7) sensiblement perpendiculaires entre elles.

4. Absorbeur selon la revendication 1, caractérisé en ce que lesdits secteurs cylindriques sont constitués par des tubes (5) cylindriques.

5. Absorbeur selon la revendication 4, caractérisé en ce que lesdits tubes (5) sont disposés entre les faces parallèles d'au moins une enveloppe (4) aplatie en tôle.

6. Absorbeur selon l'une quelconque des revendications 1 à 5, caractérisé en ce que l'épaisseur de tôle des secteurs cylindriques (5, 8) est inférieure à 20 % du rayon de courbure.

7. Absorbeur selon la revendication 4, caractérisé en ce qu'il est prévu des tubes (5) de différents diamètres, de manière à avoir une courbe effort/déplacement étagée.

## Patentansprüche

1. Energieaufnahmevorrichtung für Schienenfahrzeuge mit Längsachse (XX), die aus Profilen mit zylindrischen Teilen gebildet ist, die sich zwischen zwei Front flachen (2, 3, 4) erstrecken, wobei diese Profile unter einem in Längsrichtung verlaufenden Stoß verformbar sind und Querbeanspruchungen im wesentlichen widerstehen, wobei die verformbaren zylindrischen Teile im wesentlichen aus Blechen mit zylindrischen Querschnitten (5, 8) bestehen, die so angeordnet sind, daß ihr Hohlraum senkrecht zur Längsachse (XX) gerichtet ist, so daß sie unter dem Stoß zusammengedrückt werden, indem sie ihren Hohlraum ein wenig mehr verschließen, dadurch gekennzeichnet, daß die zylindrischen Querschnitte (5, 8), vorzugsweise mittels Bearbeitung, auf das Niveau einer tangentialen, in Längsrichtung verlaufenden Ebene verschmälert sind.

2. Aufnahmevorrichtung nach Anspruch 1, dadurch gekennzeichnet, daß die zylindrischen Querschnitte (8) aus Wellen bestehen, die senkrecht zur Längsachse (XX) auf insgesamt zur Längsachse (XX) des Fahrzeugs parallelen Blechen gebildet sind und die zwei Frontflächen (2, 3) verbinden.

3. Aufnahmevorrichtung nach Anspruch 2, dadurch gekennzeichnet, daß mindestens zwei im wesentlichen zueinander senkrechte Bleche (6, 7) vorgesehen sind.

4. Aufnahmevorrichtung nach Anspruch 1, dadurch gekennzeichnet, daß die zylindrischen Querschnitte aus zylindrischen Rohren (5) bestehen.

5. Aufnahmevorrichtung nach Anspruch 4, dadurch gekennzeichnet, daß die Rohre (5) zwischen den parallelen Flächen mindestens einer abgeplatteten Umhüllung (4) aus Blech angeordnet sind.

6. Aufnahmevorrichtung nach einem der Ansprüche 1 bis 5, dadurch gekennzeichnet, daß die Blechdicke der zylindrischen Querschnitte (5, 8) kleiner als 20 % des Krümmungsradius ist.

7. Aufnahmevorrichtung nach Anspruch 4, dadurch gekennzeichnet, daß Rohre (5) unterschiedlichen Durchmessers vorgesehen sind, so daß eine stufenweise Biegebeanspruchung/Verschiebung ausgebildet wird.

## Claims

1. Energy absorber for a rail vehicle having a longitudinal axis (XX), the said absorber consisting of profiles with cylindrical parts extending between two front surfaces (2, 3, 4), these profiles being deformable under a longitudinal shock and being substantially resistant to transverse forces, the deformable cylindrical parts consisting essentially of plates in the form of cylinder sectors (5, 8) arranged in such a way that their concavity is directed orthogonally to the longitudinal axis (XX), so that they are compressed under the shock, their concavity being closed a little more, characterized in that the cylinder sectors (5, 8) are thinned, preferably by machining, in the region of a longitudinal tangential plane.

2. Absorber according to Claim 1, characterized in that the cylinder sectors (8) consist of corrugations formed orthogonally to the longitudinal axis (XX) on plates which are substantially parallel to the longitudinal axis (XX) of the vehicle and which connect the said two front surfaces (2, 3).

3. Absorber according to Claim 2, characterized in that at least two plates (6, 7) substantially perpendicular to one another are provided.

4. Absorber according to Claim 1, characterized in that the said cylinder sectors consist of cylindrical tubes (5).

5. Absorber according to Claim 4, characterized in that the said tubes (5) are arranged between the parallel faces of at least one flattened plate-metal casing (4).

6. Absorber according to any one of Claims 1 to 5, characterized in that the plate thickness of the cylinder sectors (5, 8) is less than 20% of the radius of curvature.

7. Absorber according to Claim 4, characterized in that tubes (5) of different diameters are provided, so as to have a stepped force/displacement curve.
